# EUROPEAN PATENT APPLICATION

(11) **EP 2 258 665 A1**
(43) Date of publication of application: **08.12.2010**
(21) Application number: 09305514.3
(22) Date of filing: 04.06.2009
(51) Int. Cl.: C03B 13/08, C03B 17/06

(54) **In line glass patterning during fusion draw process**

(71) Applicant: Corning Incorporated, Corning NY 14831 (US)
(72) Inventor: Fredholm, Allan Mark, 77850 Hericy (FR); Gille, Claude, 77570 Bougligny (FR); Madi, Kamel, 75012 Paris (FR)
(74) Representative: Le Roux, Martine

(57) **Abstract**

A glass manufacturing system (100) and method are described herein that use a fusion draw process and a vertical roll apparatus (102) to manufacture a textured glass sheet (105). In one embodiment, the textured glass sheet (105) has a thickness in the range of about 0.5-3.0 mm.

## Description

### TECHNICAL FIELD

The present invention relates in general to a glass manufacturing system and a method for using a fusion draw process and a vertical roll apparatus to manufacture a textured glass sheet. In one embodiment, the textured glass sheet has a thickness in the range of about 0.5-3.0 mm.

### BACKGROUND

Glass sheet forming processes have been developed throughout the 20^{th} century based on different process ideas. For instance, glass rolling is one of the first industrial processes used to form a glass sheet as discussed in U.S. Patents Nos. 2,387,886 and 2,478,090. Later in history, the float process was invented and developed to form a glass sheet as described in an article by L.A.B. Pilkington "The Float Glass Process", Proc. Roy. Soc. Lond., Vol. 314, pp 1-25 (16 December 1969). The float process is used to make glass sheets, commonly used for architectural and automotive purposes, which have pristine surfaces without having to polish the glass surfaces. At the same time, another process known as the fusion draw process was invented and developed to form a glass sheet which has extremely pristine surfaces as described in U.S. Patent Nos. 3,338,696, 3,537,834 and 3,682,609 (the contents of which are incorporated herein by reference).

Recently, there has been an increasing interest for glass sheets that do not have pristine surfaces but instead have textured glass surfaces. This is especially true for photovoltaic applications, where a textured glass sheet is a potential lever to increase the efficiency and optical properties of photovoltaic devices. In a similar way, textured glass sheets could be used to help optimize light extraction from organic light emitting diode (OLED) lighting devices.

One can readily understand that the float process and the fusion draw process, which produce glass sheets with different levels of pristine surfaces, cannot at the same time be expected to be able to produce textured surfaces. However, it has been known to use a horizontal rolling set up together with a textured roll to produce textured glass sheets as described in U.S. Patent No. 3,554,725. The horizontal rolling set up together with the textured roll however cannot produce thin textured glass sheets. Basically, horizontal textured rolling is only possible when there is some significant amount of glass in a central part of the glass sheet being formed that has a sufficiently low viscosity to allow viscous deformation when interfacing with the textured roll. This means that the horizontal textured rolling set up can be used to produce a textured glass sheet that has a minimum thickness of about 2.5-3.0 mm. However, it would be desirable to be able to manufacture a textured glass sheet in a manner other than the known horizontal rolling set up. This need and other needs are satisfied by the present invention.

### SUMMARY

In one aspect, the present invention provides a glass manufacturing system for manufacturing a textured glass sheet. In one embodiment, the glass manufacturing system includes at least one vessel adapted to provide a molten glass and a forming apparatus adapted to receive the molten glass from one of the at least one vessel, where the forming apparatus has at least one surface which the molten glass flows thereon that forms a glass ribbon having at least one contact-free surface. Plus, the glass manufacturing system has a vertical roll apparatus including a pair of rolling rolls where at least one of the rolling rolls is a textured rolling roll. The pair of rolling rolls are adapted to receive the glass ribbon there between while the glass ribbon is viscous and moving in a substantially vertical direction down from the forming apparatus. The pair of rolling rolls are also adapted to roll the glass ribbon and at same time pattern at least one side of the glass ribbon to form the textured glass sheet.

In another aspect, the present invention provides a method for manufacturing a textured glass sheet where the method includes the steps of: (a) forming a molten glass; (b) delivering the molten glass to a forming apparatus which has at least one surface that the molten glass flows thereon to form a glass ribbon having at least one contact-free surface; and (c) delivering the glass ribbon to the vertical roll apparatus which includes a pair of rolling rolls where at least one of the rolling rolls is a textured rolling roll, the pair of rolling rolls receive the glass ribbon there between while the glass ribbon is viscous and moving in a substantially vertical direction down from the forming apparatus. The delivering step further includes: (i) rolling the glass ribbon between the rolling rolls, and (ii) patterning at least one side of the glass ribbon while rolling the glass ribbon between the rolling rolls to form the textured glass sheet.

In yet another aspect, the present invention includes a vertical roll apparatus located below a fusion forming apparatus which provides a glass ribbon. The vertical roll apparatus includes a pair of rolling rolls where at least one of the rolling rolls is a textured rolling roll. The rolling rolls are adapted to receive the glass ribbon there between while the glass ribbon is viscous and moving in a substantially vertical direction when delivered by the fusion forming apparatus. In addition, the rolling rolls are adapted to roll the glass ribbon and at the same time pattern at least one side of the glass ribbon to form a textured glass sheet.

Additional aspects of the invention will be set forth, in part, in the detailed description, figures and any claims which follow, and in part will be derived from the detailed description, or can be learned by practice of the invention. It is to be understood that both the foregoing general description and the following detailed description are exemplary and explanatory only and are not restrictive of the invention as disclosed.

### BRIEF DESCRIPTION OF THE DRAWINGS

A more complete understanding of the present invention may be had by reference to the following detailed description when taken in conjunction with the accompanying drawings wherein:

FIGURE 1 is a schematic view of an exemplary glass manufacturing system which uses a fusion draw process and a vertical roll apparatus to manufacture a textured glass sheet in accordance with an embodiment of the present invention;

FIGURE 2 is a perspective view illustrating in greater detail an isopipe shown in FIGURE 1;

FIGURES 3A-3B are a front view and a side view illustrating in greater detail the isopipe, a temperature control environment and the vertical roll apparatus shown in FIGURE 1;

FIGURE 4 is a perspective view of an exemplary textured rolling roll used in the vertical roll apparatus shown in FIGURES 1 and 3A-3B;

FIGURES 5A-5C are various diagrams illustrating an exemplary groove pattern that can be present on the textured rolling roll shown in FIGURE 4;.

FIGURES 6A-6B are various diagrams illustrating an exemplary knurl pattern that can be present on the textured rolling roll shown in FIGURE 4;

FIGURE 7A-7B are various diagrams illustrating an exemplary random roughness pattern that can be present on the textured rolling roll shown in FIGURE 4; and

FIGURE 8 is a side view illustrating in greater detail an alternative forming apparatus that could be used instead of the isopipe shown in FIGURES 1-3.

### DETAILED DESCRIPTION

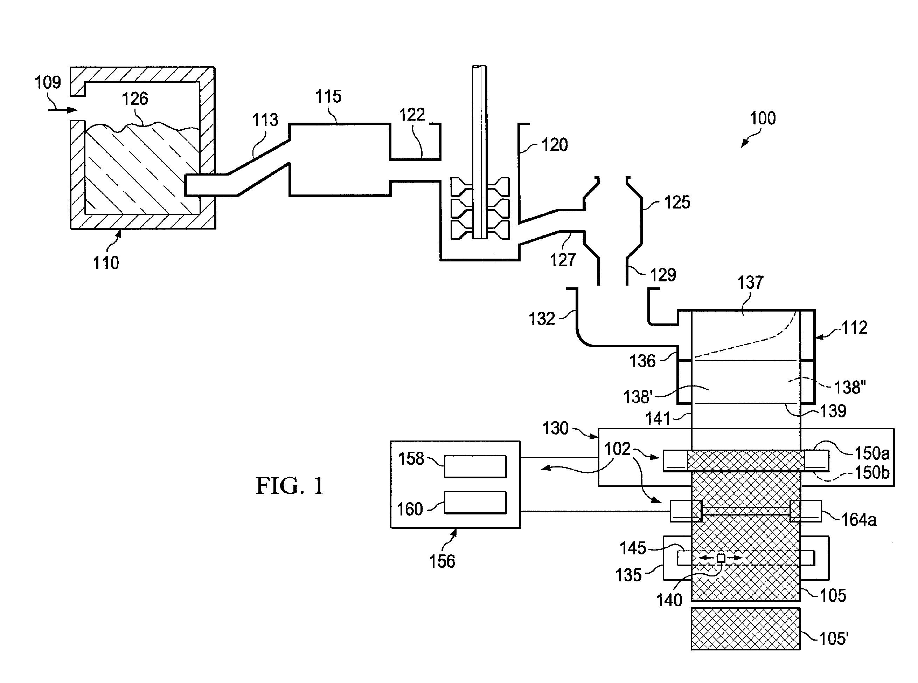

Referring to FIGURE 1, there is shown a schematic view of an exemplary glass manufacturing system 100 that uses a fusion draw process and a vertical roll apparatus 102 to manufacture a textured glass sheet 105 in accordance with an embodiment of the present invention. As shown, the exemplary glass manufacturing system 100 includes a melting vessel 110, a fining vessel 115, a mixing vessel 120 (e.g., stir chamber 120), a delivery vessel 125 (e.g., bowl 125), an isopipe 112 (forming apparatus 112, vertical glass delivery device 112), a temperature controlled environment 130, the vertical roll apparatus 102, and a glass sheet separation device 135.

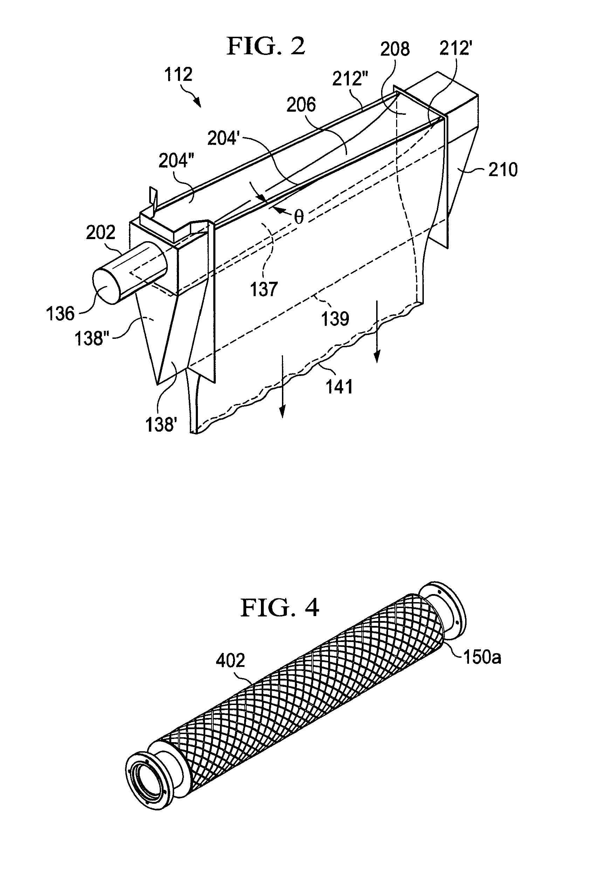

The melting vessel 110 is where glass batch materials are introduced as shown by arrow 109 and melted to form molten glass 126. The fining vessel 115 (e.g., finer tube 115) has a high temperature processing area that receives the molten glass 126 (not shown at this point) via a refractory tube 113 from the melting vessel 110 and in which bubbles are removed from the molten glass 126. The fining vessel 115 is connected to the mixing vessel 120 (e.g., stir chamber 120) by a finer to stir chamber connecting tube 122. The mixing vessel 120 is connected to the delivery vessel 125 by a stir chamber to bowl connecting tube 127. The delivery vessel 125 delivers the molten glass 126 through a downcomer 129 to an inlet 132 and into the isopipe 112. The isopipe 112 includes an inlet 136 that receives the molten glass 126 which flows into a trough 137 and then overflows and runs down two sides 138' and 138" before fusing together at what is known as a root 139. The root 139 is where the two sides 138' and 138" come together and where the two overflow walls of the molten glass 126 rejoin (e.g., refuse) to form a glass ribbon 141 (see FIGURE 2).

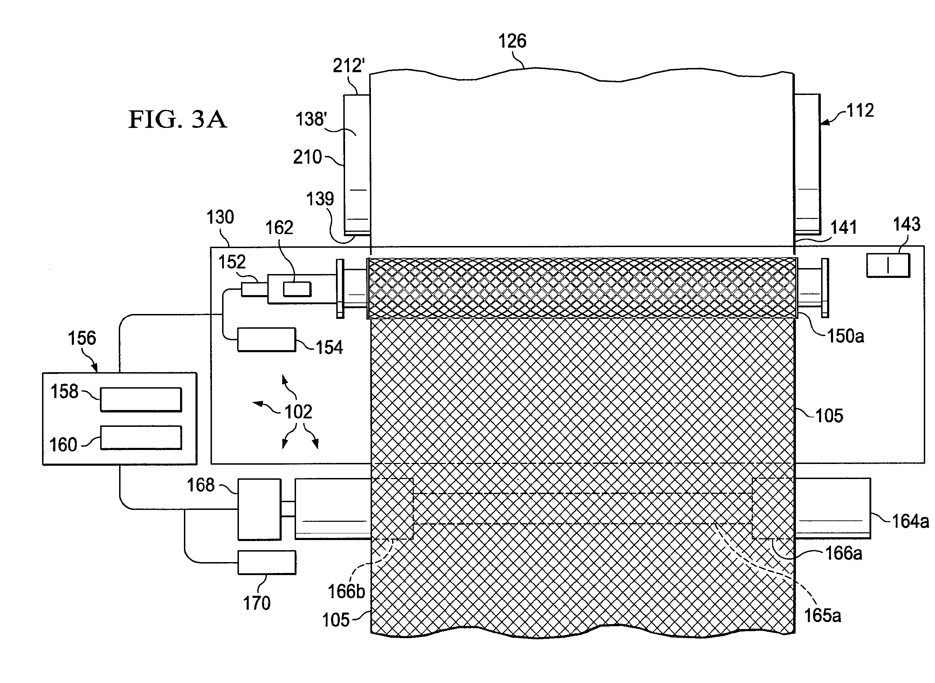

The glass ribbon 141 is subsequently drawn downward and textured between two rolling rolls 150a and 150b in the roll assembly 102 to form the textured glass sheet 105 (see FIGURES 3A-3B). The temperature controlled environment 130 (optional) gradually cools the glass ribbon 141 and the textured glass sheet 105. Then, the glass sheet separation device 135 (optional) which may have a mechanical scoring device 140 (e.g., scoring wheel 140) and a nosing device 145 is used to mechanically score the textured glass sheet 105 so it can be separated into distinct pieces of textured glass sheets 105'. A detailed discussion about the configuration of the exemplary isopipe 112 is provided next with respect to FIGURE 2.

Referring to FIGURE 2, there is shown a perspective view of the exemplary isopipe 112 which includes a feed pipe 202 that provides the molten glass 126 through the inlet 136 to the trough 137. The trough 137 is bounded by interior sidewalls 204' and 204" that are shown to have a substantially perpendicular relationship but could have any type of relationship to a bottom surface 206. In this example, the isopipe 112 has a bottom surface 206 which has a sharp decreasing height contour near the end 208 farthest from the inlet 136. If desired, the isopipe 112 can have a bottom surface 206 which has located thereon an embedded object-plow (not shown) near the end 208 farthest from the inlet 136. Alternatively, the isopipe 112 may be equipped with edge directors (not shown) located on both sides thereof.

The isopipe 112 has a cuneiform/wedge shaped body 210 with the oppositely disposed converging side-walls 138' and 138". The trough 137 having the bottom surface 206 and possibly the embedded object (not shown) is longitudinally located on the upper surface of the wedge-shaped body 210. The bottom surface 206 and embedded object (if used) both have mathematically described patterns that become shallow at end 208 which is the end the farthest from the inlet 136. As shown, the height between the bottom surface 206 and the top surfaces 212' and 212" of the trough 137 decreases as one moves away from the inlet 136 towards the end 208. However, the height of the trough 137 can vary in any manner between the bottom surface 206 and the top surfaces 212' and 212". If desired, the cuneiform/wedge shaped body 210 may be pivotally adjusted by a device such as an adjustable roller, wedge, cam or other device (not shown) to provide a desired tilt angle shown as θ which is the angular variation from the horizontal of the parallel top surfaces 212' and 212".

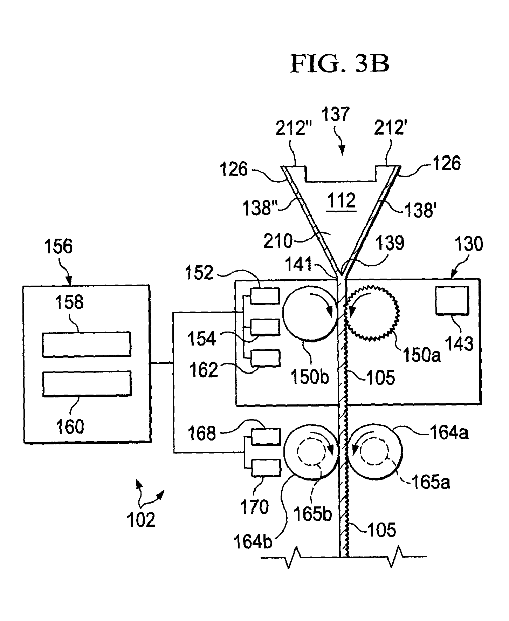

The isopipe 112 forms the glass ribbon 141 which has smooth pristine surfaces by enabling the molten glass 126 to enter the trough 137 through the feed pipe 202 and inlet 136. The molten glass 126 then wells over the parallel top surfaces 212' and 212" of the trough 137, divides, and flows down each side of the oppositely disposed converging sidewalls 138' and 138" of the wedge-shaped body 210. At the bottom of the wedge portion or the root 139, the divided molten glass 126 rejoins to form the glass ribbon 141 which has very flat and smooth pristine surfaces. The high surface quality of the glass ribbon 141 results from a free surface of the molten glass 126 that divides and flows down the oppositely disposed converging side-walls 138' and 138" and forms the exterior surfaces of the glass ribbon 141 without coming into contact with the outside of the isopipe 112. A detailed discussion about the exemplary temperature control environment 130 and the exemplary vertical roll apparatus 102 which rolls (draws) and patterns at least one side of the glass ribbon 141 to form the textured glass sheet 105 is provided next with respect to FIGURES 3-7.

Referring to FIGURES 3A-3B, there is a front view and a side view illustrating in greater detail the exemplary isopipe 112, the exemplary temperature control environment 130 and the exemplary vertical roll apparatus 102. As shown, the exemplary isopipe 112 has an effective width slightly larger than the desired width of the textured glass sheet 105 to be produced. Basically, the molten glass 126 flows over the walls 212' and 212" of the trough 137, flows down the walls 138' and 138" of the body 210 and then these two flows join at the apex 139 (referred to as the root 139) to form the glass ribbon 141. The glass ribbon 141 leaves the isopipe 112 traveling downward in a substantially vertical direction while in a viscous regime with a viscosity range of about 1,000 to 200,000 poise, and preferably between 5,000 and 50,000 poise.

The closed (or "thermally protected") temperature control environment 130 if used would normally be located below the isopipe 112 and would function to gradually cool in a controlled manner the glass ribbon 141 and the subsequent textured glass sheet 105 to avoid excessive stresses from developing in the textured glass sheet 105. The temperature control environment 130 can have one or more devices 143 that control the cooling rate of the ribbon of the glass ribbon 141 and the textured glass sheet 105 by using forced convection, cooling through exposure to water cooled elements such as hollow stainless steel tubes, arrays of heating elements etc. For example, the temperature controlled environment 130 can be made by enclosing at least a section of the process and using: (1) thermal insulation to limit cooling from outside the manufacturing process; (2) active cooling such as forced air, or radiative heat sinks such as water cooled devices etc.; and/or (3) active heating such as electric heating that is applied through windings or heated tubes etc.

At a small distance below the isopipe 112, the vertical roll apparatus 102 has a pair of rolling rolls 150a and 150b which function to receive the glass ribbon 141 there between and then roll the glass ribbon 141 and at the same time pattern at least one side of the glass ribbon 141 to form the textured glass sheet 105. The glass ribbon 141 does not flow on top of any of the rolling rolls 150a and 150b. The rolling rolls 150a and 150b are connected to one or more suitable mechanical device(s) 152 (e.g., drive controller(s), motor(s)) that enable the rotational movements of the rolling rolls 150a and 150b. The speed of the rolling rolls 150a and 150b can be adjusted to match the downward flow of the glass ribbon 141 provided by the isopipe 112. In addition, the rolling rolls 150a and 150b are connected to one or more suitable mechanical device(s) 154 (e.g., air cylinder(s) 154) that apply a horizontal force between the rolling rolls 150a and 150b which enable the application of a horizontal force on the glass ribbon 141. The horizontal force, or the mechanical stop position of the rolling rolls 150a and 150b, is set to roll the glass ribbon 141 to the desired thickness, typically in the range of about 1.0-3.0 mm. It should be noted that for clarity the brackets and supports which support the rolling rolls 150a and 150b and the various mechanical devices 152, 154 and 162 have not been shown.

In one example, the vertical roll apparatus 102 includes a control device 156 which has one or more processors 158 and at least one memory 160 (storage 160) that includes processor-executable instructions where the one or more processors 158 are adapted to interface with the memory 160 and execute the processor-executable instructions to control the mechanical device(s) 152 to rotate the rolling rolls 150a and 150b at a desired speed and to control the mechanical device(s) 154 to open-close the rolling rolls 150a and 150b to apply a desired horizontal force to the glass ribbon 141. The one or more processors 158 and the at least one memory 160 can be implemented, at least partially, as software, firmware, hardware, or hard-coded logic. In particular, the control device 156 can interface with the mechanical device(s) 152 (e.g., drive controller(s), motor(s)) to control the speed at which the glass ribbon 141 is drawn, the torque at which the glass ribbon 141 is drawn, or a combination of both speed and torque that the glass ribbon 141 is drawn to obtain the textured glass sheet 105. The rolling rolls 150a and 150b are located within the temperature controlled environment 130.

To produce a textured surface on one or more sides of the glass ribbon 141, one or both of the rolling rolls 150a and 150b has a textured surface. In this example, the rolling roll 150a has a textured surface while the rolling roll 150b has a smooth surface. Alternatively, the rolling roll 150a can have a smooth surface while the rolling roll 150b has a textured surface. In another alternative, the rolling roll 150a can have one type of a textured surface while the rolling roll 150b can have a different type of a textured surface. Lastly, the rolling rolls 150a and 150b can each have the same textured surface or they each can have any type of combination of a smooth surface and a textured surface. The rolling rolls 150a and 150b can be made from, for example, metallic alloys, ceramics, ceramic coated, or boron nitride. For instance, the rolling rolls 150a and 150b can have outside diameters in the range of 40 to 200 mm. If desired, the vertical roll apparatus 102 may include a cooling mechanism 162 which functions to use air or a liquid to internally cool the rolling rolls 150a and 150b.

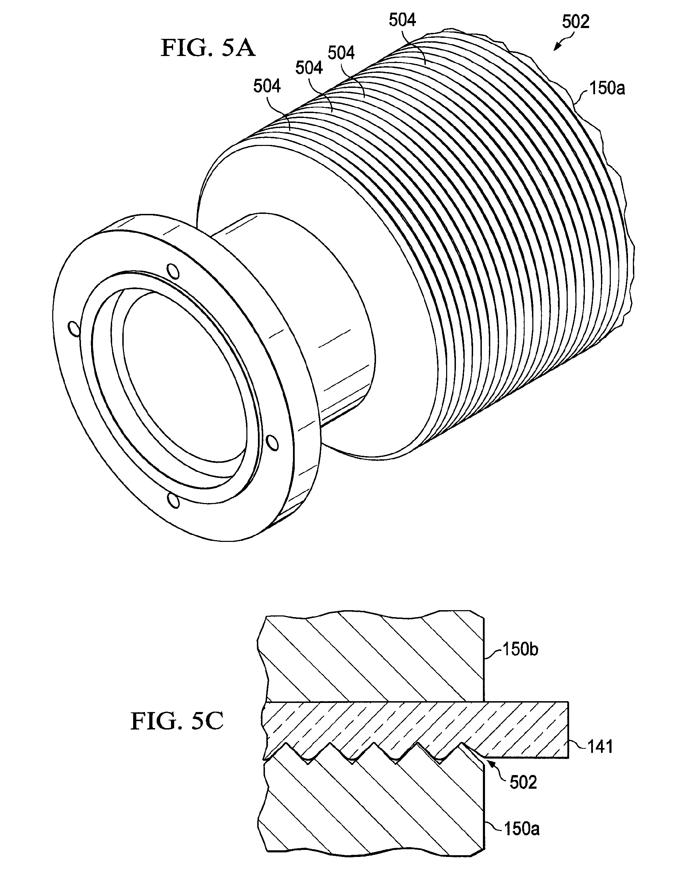

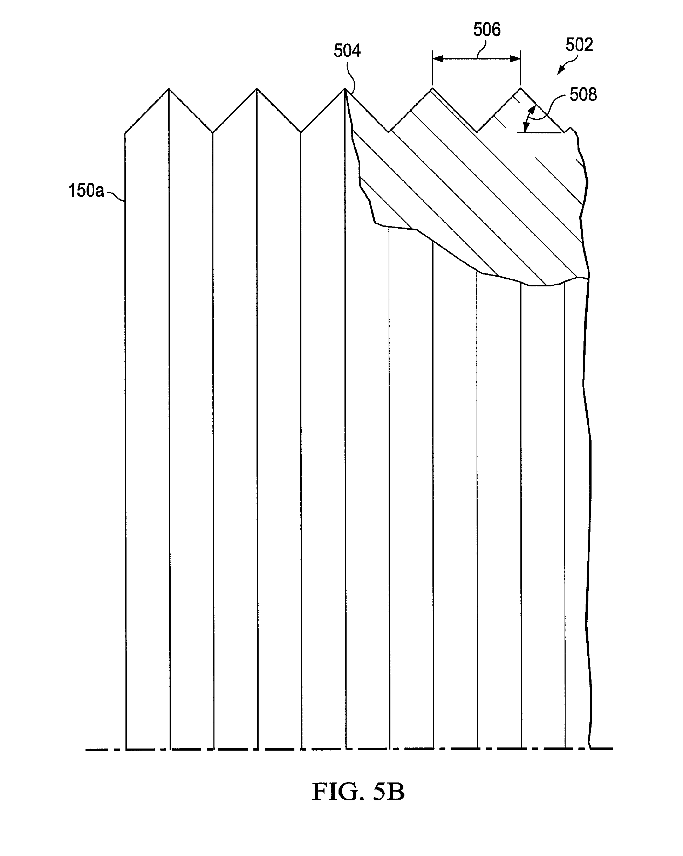

Referring to FIGURE 4, there is a perspective view of an exemplary rolling roll 150a which has a textured surface 402. The textured surface 402 can be anyone or any combination of a variety of patterns such as, for example, a repeating pattern that includes a groove pattern or a knurl pattern or a random pattern that includes a surface roughness. A detailed discussion about some of the possible exemplary textured surfaces 402 that can be formed on the textured rolling roll 150a is provided next with respect to FIGURES 5-7.

Referring to FIGURES 5A-5B, there are two diagrams illustrating a perspective view and a side view of an exemplary groove pattern 502 that can be formed on the rolling roll 150a. In this example, the groove pattern 502 is made by using a lathe to machine an array of grooves 504 which are parallel to each other around the circumference of rolling roll 150a. For example, the grooves 504 could have a 0.5-1.5 mm pitch 506 between themselves and each groove 504 could have a 30° base angle 508. FIGURE 5C is a diagram illustrating how the glass ribbon 141 would conform to the groove pattern 502 on the rolling roll 150a. Upon rolling the glass ribbon 141, one surface of the glass ribbon 141 would essentially conform to the shape of the groove textured rolling roll 150a but some rounding of the sharp points-edges can occur in the textured glass sheet 105. Plus, as the textured glass sheet 105 exits the rolling rolls 150a and 150b it is likely to still be viscous but in a high viscosity state so as to be able maintain the dimensions and patterns created thereon by the rolling rolls 150a and 150b.

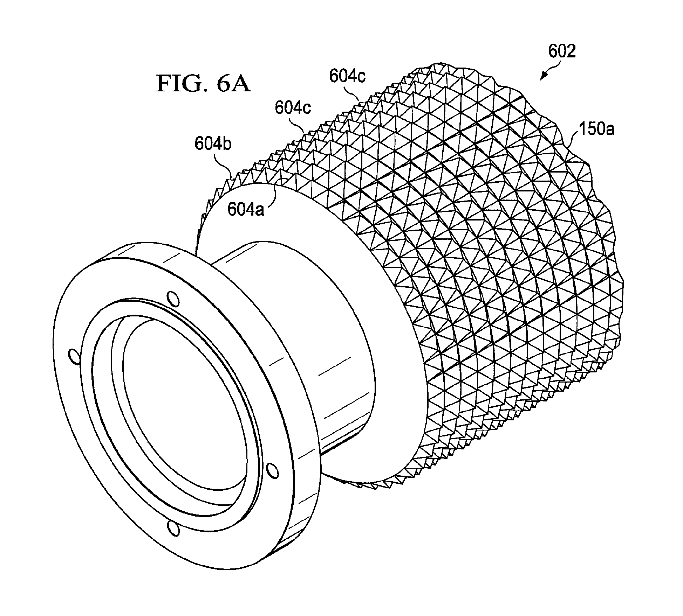

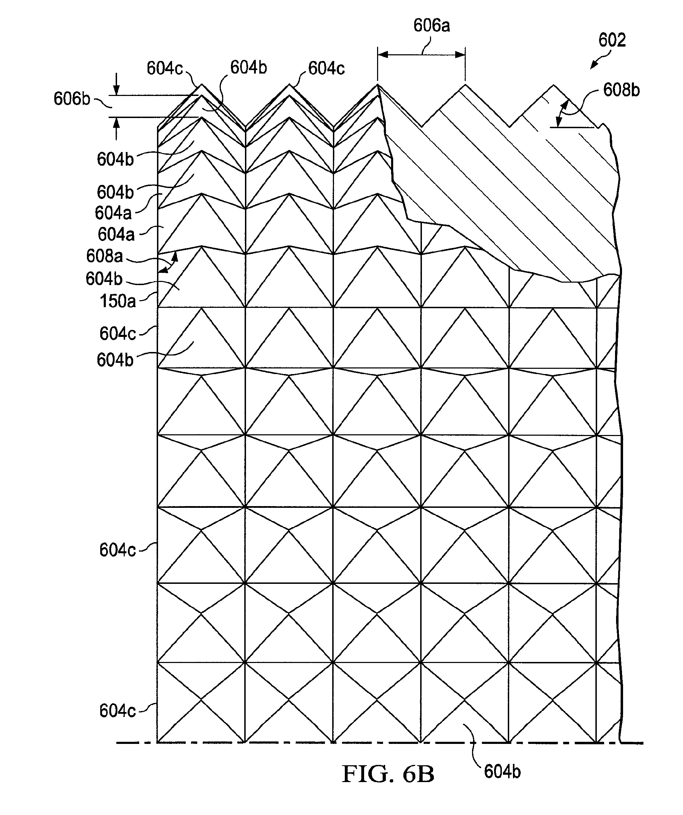

Referring to FIGURES 6A-6B, there are two diagrams illustrating a perspective view and a top view of an exemplary knurl pattern 602 that can be formed on the rolling roll 150a. In this example, the knurl pattern 602 is made by using a lathe to machine two arrays of grooves 604a and 604b perpendicular to each other where the first array of grooves 604a are parallel to each other around the circumference of rolling roll 150a and the second array of grooves 604b are parallel to each other in the direction of an axis of the rolling roll 150a where the resulting textured structures are shaped like pyramids 604c. For example, the grooves 604a and 604b could each have a 0.5-1.5 mm pitch 606a and 606b between themselves and each groove 604a and 604b could have a 30° base angle 608a and 608b. Upon rolling the glass ribbon 141, one surface of the glass ribbon 141 would essentially conform to the shape of the knurl textured rolling roll 150a but some rounding of the sharp points-edges can occur in the textured glass sheet 105. Plus, as the textured glass sheet 105 exits the rolling rolls 150a and 150b it is likely to still be viscous but in a high viscosity state so as to be able maintain the dimensions and patterns created thereon by the rolling rolls 150a and 150b.

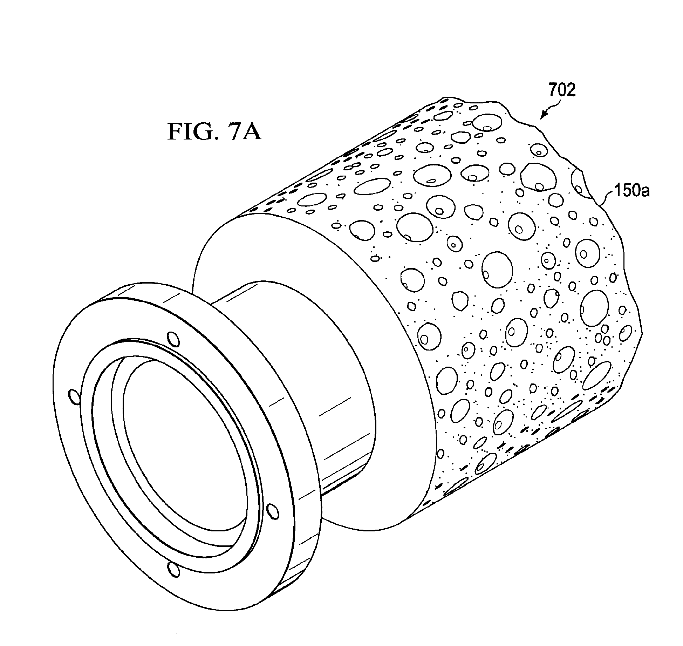

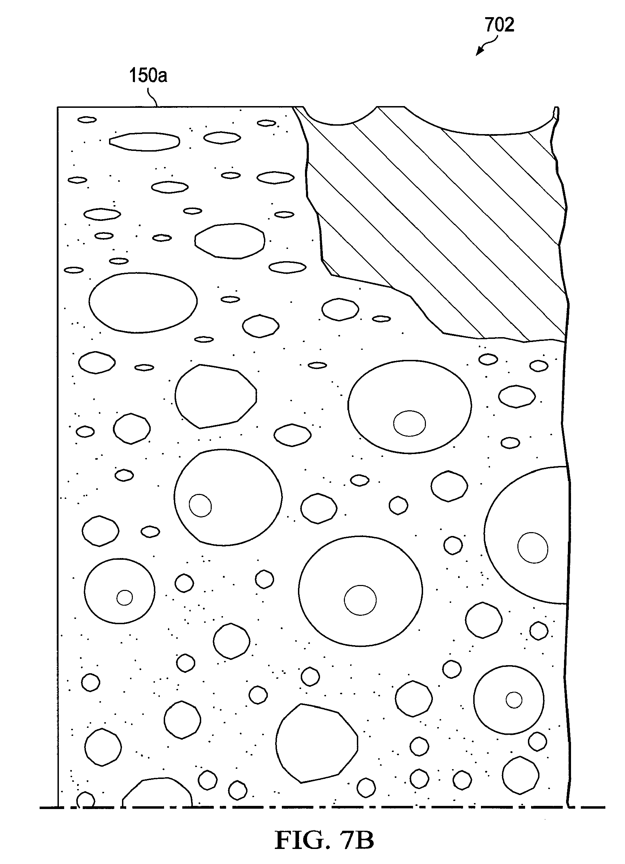

Referring to FIGURES 7A-7B, there are two diagrams illustrating a perspective view and a top view of an exemplary random roughness pattern 702 that can be formed on the rolling roll 150a. In this example, the random roughness pattern 702 is made by sand blasting at least a portion of the surface area of the rolling roll 150a. The random textured rolling roll 150a has a textured surface with a roughness that does not have a distinct pattern. Upon rolling the glass ribbon 141, one surface of the glass ribbon 141 would essentially conform to the shape of the random textured rolling roll 150a but some rounding of the sharp points-edges can occur in the textured glass sheet 105. Plus, as the textured glass sheet 105 exits the rolling rolls 150a and 150b it is likely to still be viscous but in a high viscosity state so as to be able maintain the dimensions and patterns created thereon by the rolling rolls 150a and 150b.

Referring back to FIGURES 3A-3B, the exemplary vertical roll apparatus 102 is shown as including a pair of pulling rolls 164a and 164b which are located below the rolling rolls 150a and 150b. In this example, the pulling rolls 164a and 164b extend across the width of the textured glass sheet 105 but have an undercut 165a and 165b formed therein so that the textured glass sheet 105 is contacted only near the two outer edges 166a and 166b. Thus, the pulling rolls 164a and 164b draw there between the first edge 166a and the opposing second edge 166b of the textured glass sheet 105. Alternatively, there could be four pulling rolls where two pulling rolls grab one outer edge 166a and the other two pulling rolls grab the other outer edge 166b. The pulling rolls 164a and 164b are shown located outside the temperature controlled environment 130 but they could be located within the temperature controlled environment 130.

The pulling rolls 164a and 164b are connected to one or more suitable mechanical device(s) 168 (e.g., drive controller(s), motor(s)) that enable the rotational movements of the pulling rolls 164a and 164b. In addition, the pulling rolls 164a and 164b could be connected to one or more suitable mechanical device(s) 170 (e.g., air cylinder(s) 170) that apply a horizontal force between the pulling rolls 164a and 164b which enable the application of a horizontal force on the edges 166a and 166b of the textured glass sheet 105. In fact, the control device 156 can control the mechanical device(s) 168 (e.g., drive controller(s), motor(s)) to rotate the pulling rolls 164a and 164b at a desired speed. Alternatively, the control device 156 could control the mechanical device(s) 168 (e.g., drive controller(s), motor(s)) to control the torque at which the textured glass sheet 105 is drawn, or to control a combination of both speed and torque that the textured glass sheet 105 is drawn. In addition, the control device 156 can control the mechanical device(s) 170 (e.g., air cylinder(s)) to open-close the pulling rolls 164a and 164b to apply a desired horizontal force to the textured glass sheet 105. It should be noted that for clarity the brackets and supports which support the pulling rolls 164a and 164b and the various mechanical devices 168 and 170 have not been shown.

The control device 156 can be used to rotate the pulling rolls 164a and 164b at the same linear speed as the rolling rolls 150a and 150b, or just slightly higher, to insure tensioning of the textured glass sheet 105. Alternatively, the control device 156 can control the pulling rolls 164a and 164b to rotate at a linear speed faster than the rolling rolls 150a and 150b to deliberately stretch and reduce the thickness of the textured glass sheet 105. The thickness of the textured glass sheet 105 can thereby be reduced to produce thinner sheets, in particular below 1 mm. In this case, the texture applied to either or both of the rolling rolls 150a and 150b would be designed to take into account the deformation of the texture that is rolled on the glass ribbon 141 during the further stretching caused by the pulling stage.

In any case, the textured glass sheet 105 after passing the pulling roll stage can be manipulated in various ways and in different directions (horizontal, inclined) using thermal devices and possibly mechanical (e.g. guidance) devices (not shown in FIGURE 1). Finally, the glass sheet separation device 135 which has the mechanical scoring device 140 (e.g., scoring wheel 140) and the nosing device 145 can be used to mechanically score the textured glass sheet 105 so it can then be separated into distinct pieces of textured glass sheets 105' (see FIGURE 1). Alternatively, individual textured glass sheets 105' can be cut from the continuous textured glass sheet 105 by using any sort of score and break device. The individual textured glass sheets 105' can be used in a wide-variety of devices including, for example, photovoltaic devices and organic light emitting diode (OLED) lighting devices. For instance, the textured glass sheet 105' which is less than 2mm thick (for example) can increase the optical properties and the overall efficiency through light trapping within the photovoltaic devices (or thin film photovoltaic modules). Plus, the textured glass sheets 105' which has a high refractive index such as n ≥ 1.65 (for example) can help light management by optimizing light extraction from the OLED lighting devices.

The glass manufacturing system 100 which utilizes at least the vertical rolling roll apparatus 102 can manufacture a textured glass sheet 105 that has a thickness in a range of about 0.5-3 mm. In particular, the glass manufacturing system 100 which utilizes at least the vertical rolling roll apparatus 102 can manufacture a textured glass sheet 105 that has, for example, a thickness less than 3.0 mm, less than 2.9 mm, less than 2.8 mm, less than 2.7 mm, less than 2.6 mm, less than 2.5 mm, less than 2.4 mm, less than 2.3 mm, less than 2.2 mm, less than 2.1 mm, less than 2.0 mm, less than 1.9 mm, less than 1.8 mm, less than 1.7 mm, less than 1.6 mm, less than 1.5 mm, less than 1.4 mm, less than 1.3 mm, less than 1.2 mm, less than 1.1 mm, less than 1.0 mm, less than 0.9 mm, less than 0.8 mm, less than 0.7 mm, less than 0.6 mm, less than 0.5 mm, less than 0.4 mm, less than 0.3 mm, less than 0.2 mm, or less than 0.1 mm. This thickness can be an average thickness taking into consideration the height and/or depth of the features in the textured glass sheet 105.

In a test, an experimental isopipe 112 and an experimental vertical roll apparatus 102 where applied on a small width scale to manufacture a textured glass sheet 105 with a "unicrown" composition which is a white crown glass that has thermal properties similar to soda-lime glass. A glass stream 141 approximately 90 mm wide was provided by the isopipe 112, where the glass stream 141 had a viscosity of about 15000 poise upon leaving the root 139 of the isopipe 112. The flow of glass stream 141 was about 20 kg/hr. A pair of rolling rolls 150a and 150b, one had a groove textured pattern 502, was placed about 70 mm below the isopipe 112. The rolling rolls 150a and 150b rolled and patterned the glass stream 141 at a linear speed of about 1.5 m/min. The textured glass sheet 105 that was manufacture has a width of about 50 mm and had a thickness between 1 mm and 1.5 mm. The groove textured pattern 502 was readily formed in the textured glass sheet 105. If desired, the glass manufacturing system 100 can manufacture a wide variety of textured glass sheets 105 including, for example, a textured glass-ceramic sheet, a textured borosilicate glass sheet, a textured white crown glass sheet, a textured soda lime or a textured alkali-free glass sheet.

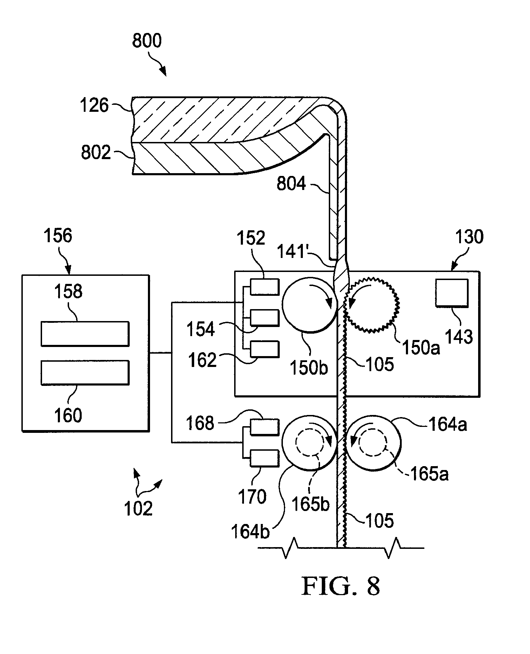

From the foregoing, one skilled in the art will appreciate that one embodiment of the present invention includes using a vertical (or close to vertical set up) glass delivery device (e.g., isopipe) and placing a pair of rolling rolls beneath the vertical glass delivery device. At least one of the rolling rolls being textured with a pattern close to what is desired on the final textured glass sheet. The vertical glass delivery device can be an isopipe which provides a glass ribbon 141 with two contact-free surfaces or any forming apparatus which has at least one surface with glass flowing thereon while the resulting glass ribbon itself has at least one contact-free surface. FIGURE 8 illustrates an exemplary forming apparatus 800 which includes a bottom of delivery section 802 that is connected to a substantially vertical plate 804 on which molten glass 126 flows to form a glass ribbon 141' having one contact-free surface, where the glass ribbon 141' is provided to the vertical rolling roll apparatus 102. In one example, the glass manufacturing system 100 uses a draw process where the glass is shaped by rolling through the pair of rolling rolls 150a and 150b to obtain at least one textured surface. At this point the thickness of the textured glass sheet 105 may be in the range of about 1.0 mm. It is further possible by using an in line redraw (pulling rolls 164a and 164b running at faster speed than the forming rolls) to reduce the thickness of the textured glass sheet 105 even more after the rolling step to the range of about 0.5 mm.

In addition, the glass manufacturing system 100 enables a textured glass sheet 105 with large dimensions (for example over 2 m squares) to be produced economically, with patterned shapes like 30° base angle grooves or pyramids. Another advantage of the present invention is that the existing fusion draw machine production units can be readily converted to include the vertical roll apparatus 102 to manufacture the textured glass sheet 105 which has (for example): (1) very good quality surface pattern; (2) significant width (for example above 2 m width); and (3) thin thickness (for example in the range of about 0.5-3.0 mm). In addition, the textured vertical roll apparatus 102 by being added below the isopipe 112 can effectively open the liquidus viscosity that the traditional fusion draw process is currently capable such that it is now conceivable to produce glasses which have liquidus viscosities as low as 1,000 poise. This is because the rolling rolls 150a and 150b help stabilize the free forming flow of molten glass not far from the root 139 of the isopipe 112.

Although several embodiments of the present invention have been illustrated in the accompanying Drawings and described in the foregoing Detailed Description, it should be understood that the invention is not limited to the disclosed embodiments, but is capable of numerous rearrangements, modifications and substitutions without departing from the invention as set forth and defined by the following claims. It should also be noted that the reference to the "present invention" or "invention" used herein relates to exemplary embodiments and not necessarily to every embodiment that is encompassed by the appended claims.

## Claims

1. A glass manufacturing system (100) comprising:
at least one vessel (110, 115, 120, 125) adapted to provide a molten glass (126);
a forming apparatus (112) adapted to receive the molten glass (126) from one of the at least one vessel (110, 115, 120, 125), where the forming apparatus has at least one surface which the molten glass flows thereon to form a glass ribbon (141) having has at least one contact-free surface; and
a vertical roll apparatus (102) including a pair of rolling rolls (150a, 150b) where at least one of the rolling rolls (150a, 150b) is a textured rolling roll, the pair of rolling rolls (150a, 150b) adapted to receive the glass ribbon (141) there between while the glass ribbon (141) is viscous and moving in a substantially vertical direction down from the forming apparatus (112), the pair of rolling rolls (150a,150b) adapted to roll the glass ribbon (141) and at same time pattern at least one side of the glass ribbon (151) to form a textured glass sheet (105).

2. The glass manufacturing system of claim 1, wherein the forming apparatus (112) includes a body (210) having an inlet (136) that receives the molten glass (126) from one of the at least one vessel (110,115,120,125), where the molten glass (126) flows into a trough (137) formed in the body (210) and then overflows two top surfaces (212', 212") of the trough and runs down two sides (138', 138") of the body (210) before fusing together to form the glass ribbon (141) which has two contact-free surfaces.

3. The glass manufacturing system of claim 1 or 2, wherein the vertical roll apparatus (102) further includes a control device (156) and at least one first mechanical device (158) adapted to rotate the rolling rolls (150a,150b) at a desired speed and at least one second mechanical device (160) adapted to open-close the rolling rolls (150a, 50b) to apply a desired horizontal force to the textured glass sheet (105).

4. The glass manufacturing system of any one of claims 1 to 3, wherein the vertical roll apparatus (102) further includes a pair of pulling rolls (164a, 164b) adapted to draw therebetween a first edge (166a) and an opposing second edge (166b) of the textured glass sheet (105).

5. The glass manufacturing system of any one of claims 1 to 4, further comprising a temperature controlled environment (130) adapted to cool the glass ribbon (141) and the textured glass sheet (105).

6. The glass manufacturing system of any one of claims 1 to 5, wherein the textured glass sheet (105) has a thickness between about 0.5-3.0 mm.

7. The glass manufacturing system of any one of claims 1 to 6, wherein the textured rolling roll (150a) is a groove patterned textured rolling roll, a knurl patterned textured rolling roll or a random rough textured rolling roll.

8. A method for manufacturing a textured glass sheet (105), said method comprising the steps of:
forming molten glass (126);
delivering the molten glass (126) to a forming apparatus (112) which has at least one surface that the molten glass (126) flows thereon to form a glass ribbon (141) having at least one contact-free surface; and
delivering the glass ribbon (141) to a vertical roll apparatus (102) including a pair of rolling rolls (150a, 150b) where at least one of the rolling rolls (150a,150b) is a textured rolling roll, the pair of rolling rolls (150a,150b) receive the glass ribbon (141) there between while the glass ribbon (141) is viscous and moving in a substantially vertical direction down from the forming apparatus (112), wherein the delivering step further includes:
rolling the glass ribbon (141) between the rolling rolls (150a,150b); and
patterning at least one side of the glass ribbon (141) while rolling the glass ribbon (141) between the rolling rolls (150a,150b) to form the textured glass sheet (105).

9. The method of claim 8, wherein the forming apparatus (112) includes a body (210) having an inlet (136) that receives the molten glass (126), where the molten glass (126) flows into a trough (137) formed in the body (210) and then overflows two top surfaces (212', 212") of the trough and runs down two sides (138', 138") of the body (210) before fusing together to form the glass ribbon (141) having two contact-free surfaces.

10. The method of claim 8 or 9, further comprising a step of rotating the rolling rolls (150a,150b) at a desired speed and opening-closing the rolling rolls (150a,150b) to apply a desired horizontal force to the glass ribbon (141).

11. The method of any one of claims 8 to 10, further comprising a step of delivering the textured glass sheet (105) to a pair of pulling rolls (164a, 164b) which draw there between a first edge (166a) and an opposing second edge (166b) of the textured glass sheet (105).

12. The method of any one of claims 8 to 11, further comprising a step of cooling the glass ribbon (141) and the textured glass sheet (105).

13. The method of any one of claims 8 to 12, wherein the at least one textured rolling roll (150a) is a groove patterned textured rolling roll, a knurl patterned textured rolling roll or a random rough textured rolling roll.

14. A photovoltaic device or an organic light emitting diode comprising the textured glass sheet (105) made according to any one of claims 8 to 13.

15. A vertical roll apparatus (102) located below a fusion forming apparatus (112) which provides a glass ribbon (141), the vertical roll apparatus (102) comprising:
a pair of rolling rolls (150a, 150b) where at least one of the rolling rolls (150a,150b) is a textured rolling roll;
the pair of rolling rolls (150a,150b) adapted to receive the glass ribbon (141) there between while the glass ribbon (141) is viscous and moving in a substantially vertical direction when provided by the fusion forming apparatus (112);
the pair of rolling rolls (150a,150b) adapted to roll the glass ribbon (141); and
the pair of rolling rolls (150a,150b) adapted to pattern at least one side of the glass ribbon (141) to form a textured glass sheet (105).
